# NEUE EUROPÄISCHE PATENTSCHRIFT

(11) **EP 1 698 543 B2**
(45) Veröffentlichungstag und Bekanntmachung des Hinweises auf die Entscheidung über den Einspruch: **17.08.2011**
(45) Hinweis auf die Patenterteilung: 23.04.2008
(21) Anmeldenummer: 05004702.6
(22) Anmeldetag: 03.03.2005
(51) Int. Cl.: B62D 25/06, H01Q 1/32, B62D 65/06

(54) **Dachmodul mit Antenne**
Roof module with antenna
Module de toit avec antenne

(43) Veröffentlichungstag der Anmeldung: 06.09.2006
(73) Patentinhaber: ArvinMeritor GmbH, 63128 Dietzenbach (DE)
(72) Erfinder: Ludwig, Matthias, 38159 Vechelde (DE); Niebuhr, Frank, 38518 Wilsche (DE); Batke, Harald, 38539 Müden / Aller (DE); Langhoff, Hans, 38518 Gifhorn (DE); Hardel, Sven, 29386 Wettendorf (DE); Beck, Herbert, 38302 Wolfenbüttel (DE); Büttner, Alexander, 63856 Bessenbach (DE); Niesner, Tobias, 38518 Gifhorn (DE)
(74) Vertreter: Prinz & Partner

(56) Entgegenhaltungen:
- EP-A- 0 447 640
- EP-A1- 1 075 169
- DE-A1- 4 141 775
- DE-A1- 10 040 872
- DE-A1- 10 158 955
- DE-A1- 10 158 961
- DE-A1- 10 242 526
- DE-A1- 19 829 248
- DE-A1- 19 958 605
- DE-T1- 3 991 179
- DE-U1- 20 116 106
- 3D-MID TECHNOLOGIE "RÄUMLICHE ELEKTRONISCHE BAUGRUPPEN"
- 'Weka Praxishandbuch PLUS', Artikel 'Kunststoffpraxis: Konstruktion'

## Beschreibung

Die Erfindung betrifft ein Dachmodul mit einer geschäumten Kunststoffschicht wobei eine Antenne vorgesehen ist, die in die Kunststoffschicht eingeschäumt ist. Die Erfindung betrifft ferner ein Verfahren zur Herstellung eines solchen Dachmoduls.

Geschäumte Dachmodule weisen als einen wesentlichen Bestandteil eine geschäumte Kunststoffschicht auf, in der aus Stabilitätsgründen Glasfasern angeordnet sein können. Ein geschäumtes Dachmodul zeichnet sich durch seine hohe Stabilität bei gleichzeitig geringen Herstellungskosten aus. Ein besonderer Vorteil besteht darin, daß ein geschäumtes Dachmodul vollständig vormontiert geliefert werden kann, so daß es auf die übrigen Teile der Karosserie eines Fahrzeugs aufgesetzt und mit diesen verbunden werden kann. Der Herstellungsvorgang ist im Vergleich zur herkömmlichen Fahrzeugdächem erheblich vereinfacht; bei diesen müssen unterhalb einer meist aus Blech bestehenden Außenhaut die übrigen Bestandteile wie Geräuschdämmatten, Innenhimmel etc. montiert werden.

Aufgrund der immer weiter steigenden Anforderungen an Kommunikation mit dem Fahrzeug und mit den Insassen des Fahrzeugs, beispielsweise Empfang von GPS-Signalen, Internetverbindung während des Fahrens, Empfang von Telefonaten oder Fernsehprogrammen, etc., ist es wünschenswert, am Dachmodul auch eine Antenne anzubringen. Aus der DE 100 40 872 A1 ist ein Fahrzeugdach bekannt, bei dem im Zwischenraum zwischen dem Innenhimmel und der Außenhaut des Daches verschiedene leitfähige Elemente angeordnet sind, die als Antenne dienen. Die leitfähigen Elemente sind insbesondere aufgeklebt oder aufgedampft. Dies ist hinsichtlich der Herstellungskosten nachteilig.

Die DE 199 58 605 A1 zeigt ein Dachmodul der eingangs genannten Art, bei dem die Antenne im Inneren der geschäumten Kunststoffschicht angeordnet ist.

Aus der EP 0 477 640 A2 ist eine Rahmenspoileranordnung bekannt, die auf die Außenseite eines Fahrzeugdachs aufgesetzt wird. Die Rahmenspoileranordnung besteht aus Kunststoff, der mit Glasfasern verstärkt ist.

Aus der DE 101 58 955 A1 ist ein Dachmodul bekannt, das aus einer Außenhaut und einer auf diese aufgeschäumten Kunststoffschicht besteht. Im Randbereich kann eine Antenne eingeschäumt werden.

Die Aufgabe der Erfindung besteht darin, ein Dachmodul zu schaffen, in das mit geringem Aufwand eine Antenne integriert werden kann.

Zur Lösung dieser Aufgabe ist erfindungsgemäß bei einem Dachmodul der eingangs genannten Art vorgesehen, daß die Antenne auf der Außenseite des Dachmoduls freiliegt und mindestens eine freiliegende Kontaktfläche aufweist. Die Antenne wird also bereits bei der Herstellung des Dachmoduls in dieses integriert, so daß eine spätere Anbringung nicht erforderlich ist. Da die Antenne in die Kunststoffschicht eingeschäumt ist, ist sie sehr gut vor mechanischen Beschädigungen geschützt. Die freiliegende Kontaktfläche ermöglicht, die Antenne anschließend elektrisch anzuschließen, so daß keine Kabel in das Dachmodul eingeschäumt werden müssen.

Die oben genannte Aufgabe wird auch durch ein Verfahren gelöst, welches die folgenden Schritte aufweist: Zunächst wird ein Trägermaterial bereitgestellt, auf dem eine Antenne angeordnet ist. Dann wird das Trägermaterial mit der Antenne so in eine Schäumform eingelegt, daß die Antenne zum Innenraum der Schäumform weist. Anschließend wird in den Innenraum der Schäumform ein Kunststoffmaterial eingebracht, das zum Dachmodul aushärtet, wobei es sich beim Aushärten mit der Antenne verbindet. Nach dem Aushärten wird das Dachmodul aus der Schäumform entnommen, und das Trägermaterial wird abgezogen, so daß die Antenne auf der Außenseite des Dachmoduls freiliegt. Ein besonderer Vorteil des erfindungsgemäßen Verfahrens besteht darin, daß für die Antenne eine besonders dünne, leitfähige Struktur ohne Eigenstabilität verwendet werden kann, die im Dachmodul selber sehr wenig Volumen benötigt. Daher kommt es zu keiner Beeinträchtigung der Stabilität des Dachmoduls. Das Trägermaterial wird ausschließlich zur Handhabung der nicht eigenstabilen Antenne verwendet.

Ein besonderer Vorteil des Verfahrens besteht darin, daß eine Kontaktfläche der Antenne von dem Trägermaterial abgedeckt sein kann, wenn sich dieses auf der Antenne befindet. Dies gewährleistet, daß beim Schäumen kein Kunststoffmaterial auf die Kontaktfläche der Antenne gelangen kann, so daß diese nach dem Entfernen des Trägermaterials freiliegt und im Fahrzeug angeschlossen werden kann.

Vorzugsweise ist vorgesehen, daß die Antenne auf das Trägermaterial aufgedruckt wird, beispielsweise indem für die Antenne eine Leitpaste oder ähnliches verwendet wird. Auf diese Weise ergeben sich besonders geringe Herstellungskosten für die Antenne.

Die Erfindung wird nachfolgend anhand einer bevorzugten Ausführungsform beschrieben, die in den beigefügten Zeichnungen dargestellt ist. In diesen zeigen:
- Figur 1 eine schematische, perspektivische Ansicht eines Dachmoduls, an dem eine Antenne angebracht ist;
- Figur 2 in einer Draufsicht ein Trägermaterial mit darauf aufgebrachter Antenne;
- Figur 3 einen ersten Schritt bei der Herstellung des Dachmoduls;
- Figur 4 einen zweiten Schritt bei der Herstellung des Dachmoduls;
- Figur 5 einen dritten Schritt bei der Herstellung des Dachmoduls;
- Figur 6 einen vierten Schritt bei der Herstellung des Dachmoduls; und
- Figur 7 ein Dachmodul mit darin angebrachter Antenne.

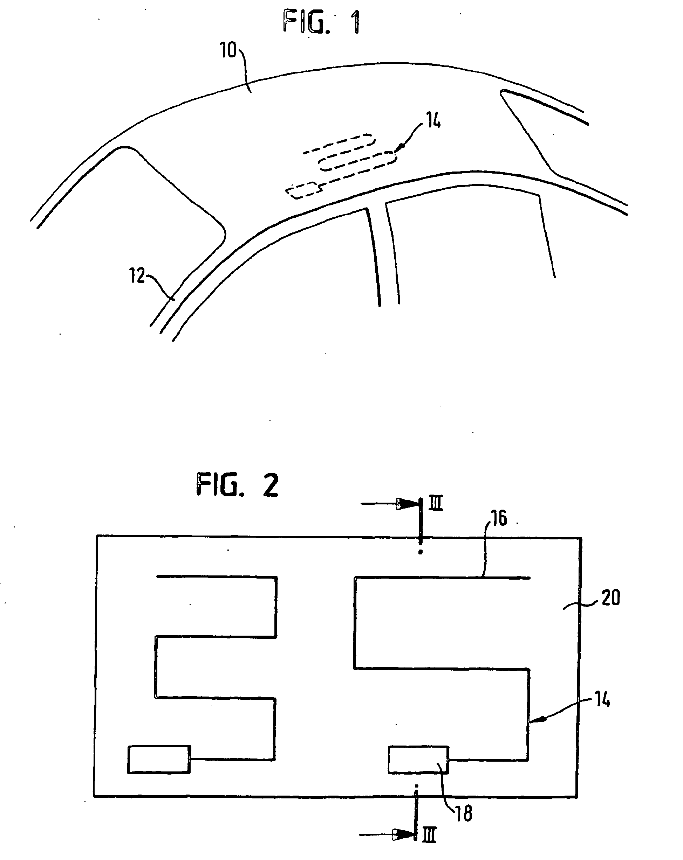

In Figur 1 ist schematisch ein Dachmodul 10 zu sehen, welches an einer Fahrzeugkarosserie 12 angebracht ist. In das Dachmodul ist eine hier schematisch gezeigte Antenne 14 eingebettet.

Die Antenne 14 (siehe auch Figur 2) besteht aus einer leitfähigen Struktur 16 und einer mit dieser verbundenen Kontaktfläche 18. Die leitfähige Struktur 16 kann beispielsweise aus einer Leitpaste oder ähnlichem bestehen, die auf ein Trägermaterial 20 aufgedruckt ist. Auf dem Trägermaterial 20 befindet sich auch die Kontaktfläche 18, die beispielsweise durch eine dünne Metallfolie gebildet sein kann. Die leitfähige Struktur 16 zusammen mit der Kontaktfläche 18 haben aufgrund ihrer Abmessungen und aufgrund des Materials, aus dem sie bestehen, keine Eigenstabilität in dem Sinne, als daß sie ohne das Trägermaterial 20 handhabbar wären.

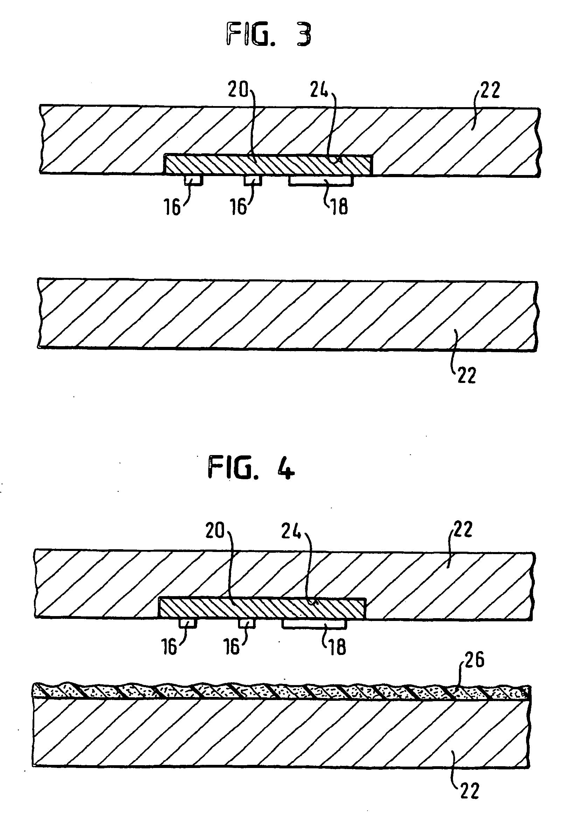

Zur Anbringung der Antenne 14 am Dachmodul wird zunächst das Trägermaterial 20 mit der darauf aufgebrachten Antenne 14 in eine Schäumform eingelegt (siehe Figur 3). Zu diesem Zweck weist eines der beiden Teile 22 der Schäumform eine Aussparung 24 auf, in der das Trägermaterial aufgenommen ist, so daß es bündig mit der Oberfläche des entsprechenden Teils der Schäumform abschließt. Das Trägermaterial 20 kann durch beliebige geeignete Mittel in der Aussparung 24 gehalten werden, beispielsweise unter Druck.

Anschließend wird in die aus den beiden Teilen 22 gebildete Schäumform ein schäumbares Kunststoffmaterial 26 eingebracht, das hier mit Glasfasern versehen ist. Als Kunststoffmaterial ist insbesondere Polyurethan geeignet.

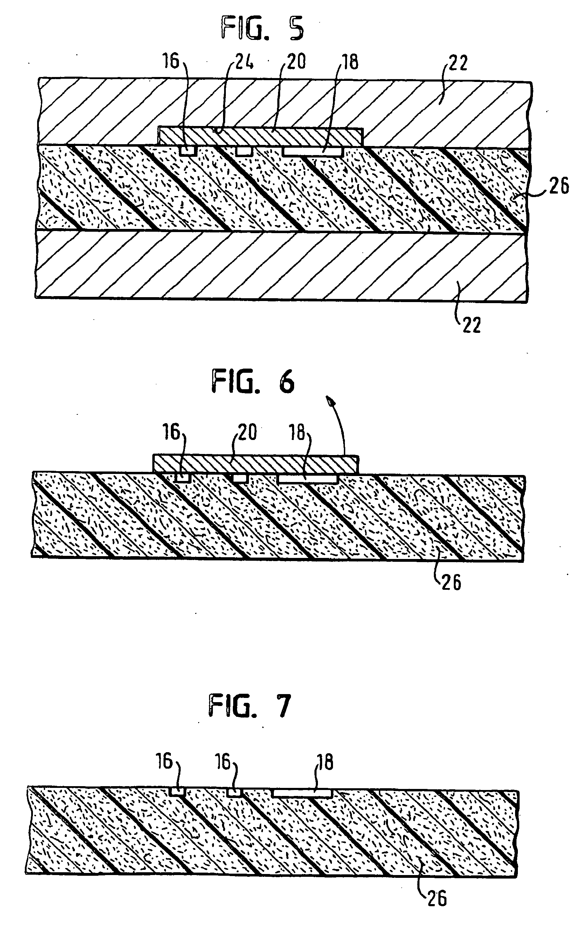

Das Kunststoffmaterial 26 expandiert dann (siehe Figur 5) und härtet aus, wobei die leitfähige Struktur 16 und die Kontaktfläche 18 der Antenne auf den nicht vom Trägermaterial 20 bedeckten Seiten vom Kunststoffmaterial umschlossen werden. Das Kunststoffmaterial 26 geht dabei eine mechanische Verbindung mit der Antenne 14 ein, so daß diese zuverlässig in der geschäumten Kunststoffschicht 26 verankert ist.

Nach Öffnen der Schäumform kann das Trägermaterial 20 abgezogen werden (siehe Figur 6). Zurück bleibt dann das Dachmodul mit der geschäumten Kunststoffschicht 26 und der darin eingebetteten Antenne bestehend aus leitfähiger Struktur 16 und Kontaktfläche 18. Von besonderem Vorteil ist, daß die von der Kunststoffschicht 26 abgewandte Seite der Kontaktfläche 18 nicht mit dem Kunststoffmaterial verunreinigt werden kann. Daher ist eine gute Kontaktierung gewährleistet.

Das geschäumte Dachmodul ist hier nur sehr schematisch dargestellt. Zusätzlich zur geschäumten Kunststoffschicht 26 können weitere Schichten vorhanden sein, beispielsweise eine tiefgezogene Kunststoffolie, welche die Außenhaut des Daches bildet. Solche zusätzlichen Bauteile sind für das Verständnis der Erfindung jedoch nicht wesentlich, so daß sie hier nicht dargestellt sind.

### Bezugszeichenliste:

- 10:: Dachmodul
- 12:: Fahrzeugkarosserie
- 14:: Antenne
- 16:: Leitfähige Struktur
- 18:: Kontaktfläche
- 20:: Trägermaterial
- 22:: Schäumformteil
- 24:: Aussparung
- 26:: Schäumbarer Kunststoff

## Patentansprüche

1. Dachmodul (10) mit einer geschäumten Kunststoffschicht (26), wobei eine Antenne (14) vorgesehen ist, die in die Kunststoffschicht (26) eingeschäumt ist, **dadurch gekennzeichnet, daß** die Antenne auf der Außenseite des Dachmoduls freiliegt und (14) mindestens eine freiliegende Kontaktfläche (18) aufweist.

2. Dachmodul (10) nach Anspruch 1, **dadurch gekennzeichnet, daß** die Antenne (14) aus einer leitfähigen Struktur ohne Eigenstabilität besteht.

3. Dachmodul (10) nach einem der vorhergehenden Ansprüche, **dadurch gekennzeichnet, daß** die Kunststoffschicht (26) aus Polyurethan besteht.

4. Dachmodul (10) nach einem der vorhergehenden Ansprüche, **dadurch gekennzeichnet, daß** die Kunststoffschicht (26) mit Glasfasern verstärkt ist.

5. Verfahren zur Herstellung eines Dachmoduls (10) mittels der folgenden Schritte:
- es wird ein Trägermaterial (20) bereitgestellt, auf dem eine Antenne (14) angeordnet ist;
- das Trägermaterial (20) wird mit der Antenne (14) so in eine Schäumform (22) eingelegt, daß die Antenne (14) zum Innenraum der Schäumform (22) weist;
- in den Innenraum der Schäumform (22) wird ein Kunststoffmaterial (26) eingebracht, das zum Dachmodul aushärtet, wobei es sich beim Aushärten mit der Antenne (14) verbindet;
- das Dachmodul (26) wird aus der Schäumform (22) entnommen;
- das Trägermaterial (20) wird abgezogen, so daß die Antenne (14) auf der Außenseite des Dachmoduls freiliegt.

6. Verfahren nach Anspruch 5, **dadurch gekennzeichnet, daß** die Antenne mindestens eine Kontaktfläche (18) aufweist, die von dem Trägermaterial (20) abgedeckt ist, wenn sich dieses auf der Antenne (14) befindet.

7. Verfahren nach Anspruch 5 oder Anspruch 6, **dadurch gekennzeichnet, daß** die Antenne (14) auf das Trägermaterial (20) aufgedruckt wird.

## Claims

1. Roof module (10) with a foamed plastic layer (26), provided with an antenna (14) encapsulated in the foam of the plastic layer (26), **characterized in that** the antenna (14) is exposed on the outer side of the roof module and has at least one exposed contact area (18).

2. Roof module (10) according to Claim 1, **characterized in that** the antenna (14) comprises a conductive structure without stability of its own.

3. Roof module (10) according to one of the preceding claims, **characterized in that** the plastic layer (26) consists of polyurethane.

4. Roof module (10) according to one of the preceding claims, **characterized in that** the plastic layer (26) is reinforced with glass fibres.

5. Method of producing a roof module (10) by means of the following steps:
a carrier material (20) is provided, with an antenna (14) arranged on it;
the carrier material (20) is placed with the antenna (14) into a foaming mould (22) in such a way that the antenna (14) points to the interior space of the foaming mould (22);
a plastics material (26) is introduced into the interior space of the foaming mould (22) and cures to form the roof module, bonding with the antenna (14) as it cures;
the roof module (26) is removed from the foaming mould (22);
the carrier material (20) is pulled off, so that the antenna (14) is exposed on the outer side of the roof module.

6. Method according to Claim 5, **characterized in that** the antenna has at least one contact area (18), which is covered by the carrier material (20) when the latter is on the antenna (14).

7. Method according to Claim 5 or Claim 6, **characterized in that** the antenna (14) is printed onto the carrier material (20).

## Revendications

1. Module de toit (10) avec une couche de plastique cellulaire (26), dans lequel il est prévu une antenne (14) qui est noyée dans la couche de plastique cellulaire (26), **caractérisé en ce que** l'antenne (14) est disposée librement sur la face extérieure du module de toit et comprend au moins une face de contact accessible librement (18).

2. Module de toit (10) selon la revendication 1, **caractérisé en ce que** l'antenne (14) est constituée d'une structure conductrice sans stabilité propre.

3. Module de toit (10) selon l'une quelconque des revendications précédentes, **caractérisé en ce que** la couche de plastique (26) se compose de polyuréthane.

4. Module de toit (10) selon l'une quelconque des revendications précédentes, **caractérisé en ce que** la couche de plastique (26) est renforcée par des fibres de verre.

5. Procédé de fabrication d'un module de toit (10) au moyen des étapes suivantes:
- on prépare une matière de support (20), sur laquelle on dispose une antenne (14);
- on dépose la matière de support (20) avec l'antenne (14) dans un moule à mousse (22), de telle manière que l'antenne (14) soit orientée vers l'espace intérieur du moule à mousse (22);
- on introduit dans l'espace intérieur du moule à mousse (22) une matière plastique (26) qui durcit en formant le module de toit (10), en se liant à l'antenne (14) lors du durcissement;
- on retire le module de toit (10) hors du moule à mousse (22);
- on enlève la matière de support (20), de telle manière que l'antenne (14) soit disposée librement sur la face extérieure du module de toit.

6. Procédé selon la revendication 5, **caractérisé en ce que** l'antenne (14) présente au moins une face de contact (18), qui est recouverte par la matière de support (20) lorsque celle-ci se trouve sur l'antenne (14).

7. Procédé selon la revendication 5 ou 6, **caractérisé en ce que** l'antenne (14) est imprimée sur la matière de support (20).
